# FASCICULE DE BREVET EUROPEEN

(11) **EP 0 527 665 B1**
(45) Date de publication et mention de la délivrance du brevet: **23.08.1995**
(21) Numéro de dépôt: 92402083.7
(22) Date de dépôt: 17.07.1992
(51) Int. Cl.: B60K 28/06, G08B 21/00

(54) **Dispositif embarqué et procédé de repérage et de suivi de la position du véhicule sur la route et dipositif d'aide à la conduite en comportant application**
Bordvorrichtung und Verfahren zum Ermitteln und Folgen der Lage eines Fahrzeugs auf die Strasse, und das Verfahren anwendende Fahrhilfsvorrichtung
Board device and method for detecting and following the position of a vehicle on the road and driving-aid device applying the method

(30) Priorité: 19.07.1991 FR 9109167
(43) Date de publication de la demande: 17.02.1993
(73) Titulaire: MATRA CAP SYSTEMES, 78140 Velizy-Villacoublay (FR)
(72) Inventeur: Valade, Jean Michel, F-78470 Saint Remy les Chevreuses (FR); Calesse, Christophe, F-92260 Fontenay aux Roses (FR)
(74) Mandataire: Fort, Jacques

(56) Documents cités:
- EP-A- 0 048 492
- EP-A- 0 390 583
- PATENT ABSTRACTS OF JAPAN vol. 013, no. 289 (M-845)5 Juillet 1989 & JP-A-10 83 423 (MASAZUMI MURAI) 29 Mars 1989
- IEEE TRANSACTIONS ON PATTERN ANALYSIS AND MACHINE INTELLIGENCE, vol. 10, no. 3, Mai 1988, NEW YORK US pages 342 - 361 MATTHEW A. TURK ET AL. 'VITS - A Vision System for Autonomous Land Vehicle Navigation'

## Description

L'invention concerne le domaine de l'information du conducteur et de l'aide à la conduite d'un véhicule routier par fourniture au conducteur d'informations et d'alarmes en cas de localisation ou d'évolution anormale du véhicule sur la route.

Elle utilise le fait que la plupart des routes comporte à l'heure actuelle une signalisation au sol identifiable sur au moins une quinzaine de mètres en avant (et éventuellement en arrière) du véhicule.

Cette signalisation est malheureusement souvent partiellement effacée, susceptible d'être confondue avec des accidents de la chaussée ou des bas-côtés et elle est fréquemment interrompue, de sorte qu'il semble à première vue que toute référence à cette signalisation ou bien génèrera un taux très élevé de fausses alarmes ou bien sera inopérante dans de nombreux cas.

On a cependant déjà proposé un dispositif et un procédé respectivement conformes aux préambules des revendications 1 et 7 (JP-A-1-83423).

On a également proposé (IEEE TRANSACTIONS ON PATTERN ANALYSIS AND MACHINE INTELLIGENCE, vol. 10, no 3, Mai 1988, New York U.S. ; MATTHEW A. TURK ET AL. : 'VITS - A Vision System for Autonomous Land Vehicle Navigation' ; un dispositif permettant au cours d'une phase finale de traitement de reconstituer l'image d'une caméra portée en tenant compte de la perspective.

L'invention vise notamment à fournir un dispositif embarqué sur véhicule routier permettant de suivre la position du véhicule sur la route à partir de données représentatives de l'environnement.

Dans ce but l'invention propose notamment un dispositif conforme à la revendication 1.

Le dispositif peut être prévu pour tenir uniquement compte d'une seule image représentant la situation à un instant donné, ou mieux l'évolution sur plusieurs images, ce qui est possible sauf en zone urbaine ou en cas de circulation très ralentie.

Dans un mode avantageux de réalisation, le dispositif comporte des capteurs de paramètres de conduite, notamment de l'état des indicateurs de changement de direction (clignotants), et des moyens d'alarme en cas de discordence entre la situation réelle du véhicule et les signaux fournis par les capteurs.

Le dispositif est susceptible d'être réalisé sous une forme plus ou moins élaborée, apportant une aide plus ou moins complète à la conduite.

Dans un mode de réalisation sommaire, le dispositif est prévu pour fonctionner uniquement suivant un mode qu'on peut qualifier d'informatif, donnant au conducteur une information sur la position latérale du véhicule et sa localisation par rapport à la voie suivie.

Ce mode informatif peut être complété par la génération de signaux d'alarme en cas de situation anormale. Cette situation peut être identifiée par analyse de l'image à un instant donné et des signaux fournis par les capteurs de paramètres de conduite au même instant, c'est-à-dire pendant un même cycle courant : en particulier une telle alarme peut être fournie en cas de début de franchissement d'une ligne continue ou en cas de vitesse excessive par rapport à la courbure d'un virage décelé par la caméra en avant du véhicule.

D'autres alarmes peuvent correspondre à une situation qui exige d'effectuer une corrélation entre des paramètres acquis au cours du cycle courant (correspondant à l'exploitation d'une image) et de paramètres ou d'évènements acquis au cours d'un cycle précédent et mémorisés : cela permet par exemple d'éviter l'émission d'un avertissement en cas de maintient des clignotants à l'état actionné à condition qu'intervienne un franchissement de ligne discontinue ou une mise en virage des véhicules par action sur le volant dans un délai déterminé.

L'alarme peut être visuelle ou sonore, voire kinesthétique. Plusieurs niveaux d'alarme, plus ou moins impératifs, peuvent être prévus pour s'effectuer successivement en cas de défaut de réaction du conducteur, le temps de réponse du conducteur alloué à la suite de l'alarme de chaque niveau étant établi une fois pour toute ou dynamiquement en fonction des caractéristiques de conduite.

Le dispositif peut également être prévu pour avoir un mode "actif" de fonctionnement, le passage en mode actif et hors du mode actif étant commandé par le contrôleur. Le dispositif assure alors une véritable aide à la conduite. Cela implique qu'il soit complété par des actionneurs permettant par exemple un contrôle temporaire de la direction pour commander la direction, maintenir le véhicule au milieu de la voie délimitée par des bandes de marquage au sol et pour éviter au conducteur la fatigue de la résistance à un vent latéral ; le mode actif peut être prévu pour d'autres fonctions, par exemple pour maintenir une vitesse indiquée par le conducteur, mais la réduire lorsque l'analyse de l'image fournie par la caméra indique la présence de courbes de faible rayon en amont du véhicule.

Enfin le dispositif peut être complété par des capteurs supplémentaires, notamment de position du volant, et par un programme lui permettant de fonctionner dans un mode qu'on peut qualifier de "contrôle de vigilance" permettant de déceler la fatigue ou l'assoupissement du conducteur. La baisse de vigilance peut être détectée par suivi des caractéristiques de conduite pour un conducteur donné et comparaison de l'évolution avec des conséquences, connues et mémorisées de l'assoupissement. Tout conducteur donné, à l'état de veille normal, a un mode de conduite qui lui est propre, identifiable par ses caractéristiques spatiales et temporelles (position moyenne du véhicule sur sa voie en ligne droite, écart-type par rapport à la position moyenne, amplitude et progressivité des mouvements de correction d'orientation du véhicule en sortie de virage, temps de réaction en entrée de virage, etc...). Ces caractéristiques sont modifiées par l'assoupissement : par exemple le conducteur fatigué ou en état de somnolence tend à circuler au milieu de la route, à laisser dériver son véhicule et à revenir brutalement en ligne. Une telle surveillance peut notamment être effectuée par un logiciel de type système expert à apprentissage..

Pour que le dispositif soit efficace, il est nécessaire qu'il ne présente qu'un taux réduit de fausses alarmes et que tout défaut de fonctionnement ou panne soit immédiatement porté à la connaissance du conducteur. La seconde condition imposera en général de munir le dispositif d'un programme d'auto-diagnostic vérifiant périodiquement son fonctionnement correct, par exemple par corrélation entre les signaux fournis par la caméra et par les différents capteurs et comparaison avec des critères de vraisemblance. Dans le cas d'un dispositif d'aide à la conduite susceptible de passer en mode actif, toute panne d'actionneur devra aller dans le sens de la sécurité, que ce soit pour l'actionnement ou le maintient du volant ou pour la commande de la vitesse.

Le dispositif susceptible de fonctionner en mode actif peut être prévu pour que le non respect d'une alarme provoque une intervention sur la vitesse et/ou la direction du véhicule. Mais le dispositif sera cependant prévu pour permettre dans tous les cas au conducteur de surmonter l'action automatique, notamment pour faire face à une situation d'urgence.

L'invention propose également un procédé de repérage et de suivi de la position d'un véhicule en circulation sur une route, caractérisé en ce que :
- on forme l'image d'une zone de la route en avant du véhicule, comportant les bandes de marquage au sol délimitant une voie de circulation au moins,
- on filtre l'image pour ne conserver que les éléments correspondant aux bandes de délimitation des voies,
- on reconstruit l'image filtrée dans le plan du sol par compensation des effets de perspective et approximation géométrique,
- on chaîne les fragments de lignes successives correspondant aux bandes pour modéliser la voie par rapport à la position du véhicule, et
- on affiche la position du véhicule ou on déclenche une alarme en cas de situation anormale révélée par le modèle.

L'invention sera mieux comprise à la lecture de la description qui suit d'un mode particulier de réalisation donné à titre d'exemple non limitatif. La description se réfère aux dessins qui l'accompagnent dans lesquels :
- la figure 1 est un schéma d'implantation de la caméra d'un dispositif suivant l'invention sur un véhicule ;
- la figure 2 est un synoptique de principe montrant une constitution possible d'un dispositif capable de fonctionner en mode surveillance et éventuellement en mode de contrôle de vigilance ;
- la figure 3 montre l'allure de l'image fournie par une caméra du genre montré en figure 1, pour deux orientations et deux focales différentes ;
- les figures 4A-4E montrent des étapes successives du traitement d'une image fournie par la caméra de la figure 1 ;
- les figures 5A, 5B, 5C montrent l'extraction des centres des bandes de marquage au sol à partir de la répartition de la luminance L sur une ligne de balayage x de la caméra ;
- les figures 6 et 7 sont des schémas de principe du fonctionnement, respectivement lors de la recherche de la route et lors du suivi de la route,
- la figure 8 est un logigramme de principe d'un procédé de suivi de route et d'aide à la conduite suivant l'invention ;
- la figure 9 est un schéma possible du module d'acquisition de modèle de la voie sur laquelle circule le véhicule ;
- les figures 10, 11 et 12 sont des logigrammes de modules de détection, de poursuite et de modélisation qui interviennent dans le procédé.

On décrira tout d'abord la constitution de principe d'un dispositif suivant l'invention et les caractéristiques essentielles de fonctionnement, avant de passer à une description détaillée d'un organigramme.

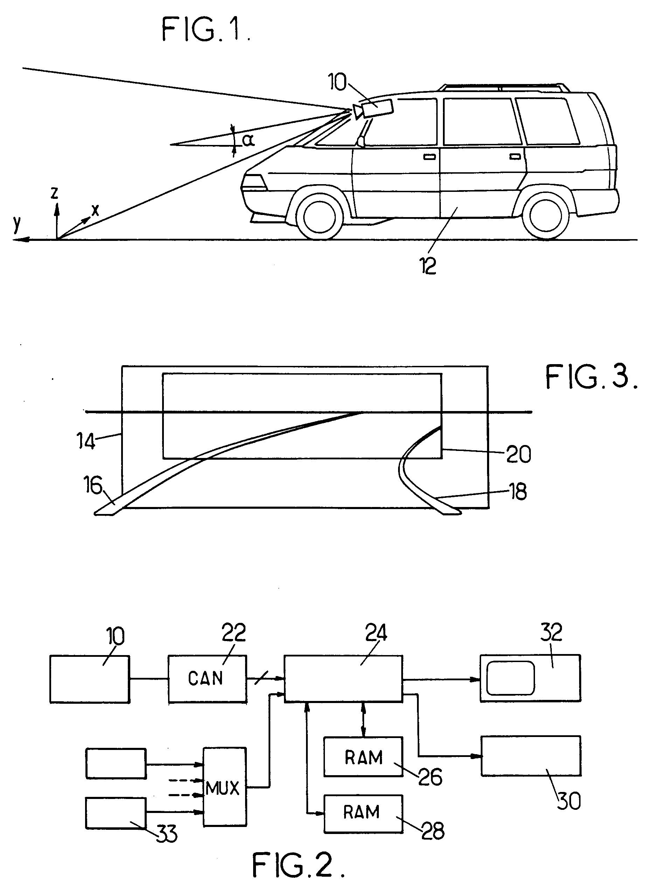

L'organe d'entrée essentiel du dispositif est constitué par une caméra 10 (figure 1) de fourniture d'une image de la route en avant du véhicule 12, pouvant être complété par une caméra fournissant des indications sur la situation en arrière du véhicule 12. On utilisera généralement une caméra à matrice ou barrette de capteurs à couplage de charges, dite caméra CCD, sensible dans le domaine de l'infrarouge, qui réduit le risque de confusion entre les irrégularités de la route et le marquage au sol. Il existe au surplus des caméra CCD de prix acceptable.

Le processeur fournit, dans le mode de réalisation le plus simple, une information d'alarme à un appareil d'avertisseur sonore ou lumineux 30. Il peut également fournir sur un écran de visualisation 32 une indication de la position du véhicule sur la route.

Dans la pratique, la puissance de calcul requise exige un processeur comprenant un calculateur équivalent à un ordinateur personnel PCI 386 d'IBM et d'une carte programmable d'accélération de calcul MATROX PG 1280 pour l'acquisition et le traitement de l'image.

La caméra doit avoir un champ horizontal suffisant pour faire apparaître les lignes latérales délimitant une voie de circulation. Le choix de l'inclinaison α de la caméra résulte d'un compromis : une caméra orientée vers le bas avec une focale courte donne un champ du genre montré en 14 sur la figure 3, avec une précision élevée de positionnements latéral et angulaire des lignes, tels que 16 et 18, à proximité du véhicule mais une faible précision à distance. Une caméra plus proche de l'horizontale, avec une focale longue, donne une meilleure précision des parties lointaines de la route, au détriment de la précision sur la position du véhicule, comme indiqué en 20.

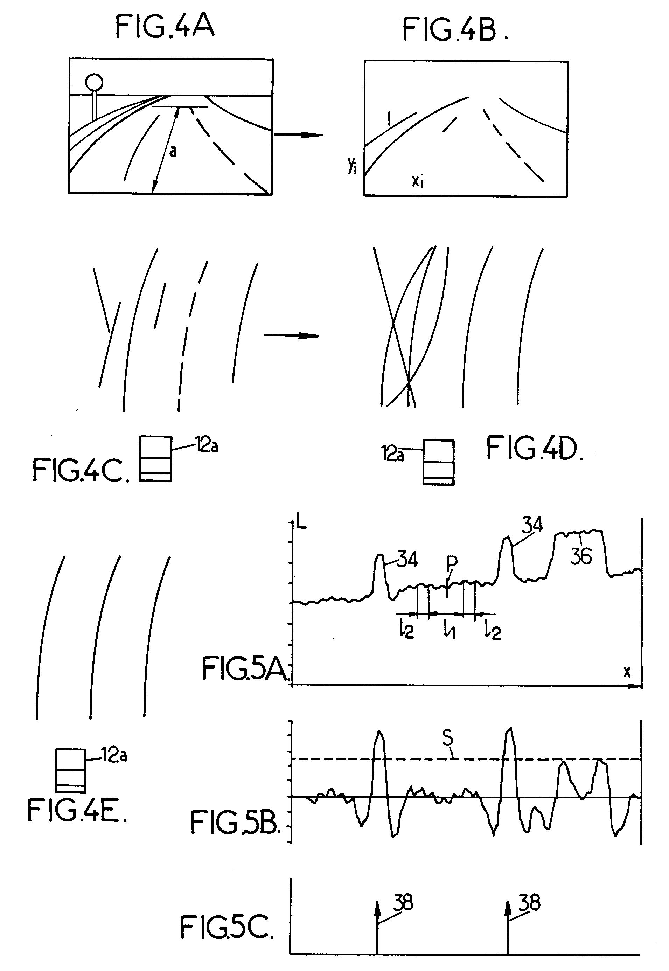

Dans la pratique, il est nécessaire de disposer d'une image satisfaisante sur une distance a (figure 4A) allant de quelques mètres, typiquement 2 à 4 mètres, jusqu'à une vingtaine ou une trentaine de mètres.

On voit sur la figure 3 que, du fait de la perspective, les bandes de délimitation des voies de circulation représenteront un nombre de pixels par ligne de balayage de type télévision qui diminue au fur et à mesure que la distance au véhicule augmente. Au surplus ces bandes ont un tracé irrégulier. Les algorithmes de traitement de l'image tiendront compte de ces phénomènes.

La caméra 10 sera généralement équipée d'un réglage automatique d'ouverture en fonction des variations de l'éclairement ambiant. Il sera souvent utile de prévoir un polariseur devant l'optique. La caméra peut par exemple être implantée sur le véhicule à l'emplacement habituel d'un rétroviseur en haut du pare-brise, à l'intérieur de l'habitacle.

Les composants nécessaires pour constituer un dispositif de repérage et de suivi de la position du véhicule comportent, en plus de la caméra 10 et d'un convertisseur analogique-numérique 22 si la caméra fournit les indications sous forme analogique, des moyens de traitement d'informations ayant au moins un processeur 24, une mémoire vive de travail 26 (de capacité suffisante pour contenir les caractéristiques de plusieurs images si l'évolution de la scène est utilisée) et une mémoire de masse 28 contenant un logiciel de mise en oeuvre d'algorithmes de traitement. Ces algorithmes seront capables d'effectuer :
- le filtrage et la binarisation de l'image provenant de la caméra pour ne conserver que les éléments correspondant aux bandes de délimitation des voies (pointillés et lignes continues) ;
- la reconstruction de l'image traite dans le plan du sol, c'est-à-dire la compensation des effets de perspective et une approximation (circulaire ou autre) permettant de lisser les irrégularités des tracés réels sur la route ;
- le chaînage des fragments de lignes successif.

Pour fournir une alarme par comparaison, le dispositif comporte également des capteurs de paramètre de conduite 33 tels que ceux qui seront définis plus loin.

L'opération complète est à effectuer pour repérer les caractéristiques de la route. Le suivi ultérieur peut être plus simple, étant donné la continuité des lignes, qui permet d'utiliser un algorithme de prédiction à partir de la position, de l'oriention, de la largeur et de la courbure des lignes précédemment identifiées, lorsque la cadence des cycles est suffisamment élevée (supérieure à 10 Hz).

Les étapes successives d'un processus d'identification sont schématisées, à titre d'exemple, sur les figures 4A à 4E.

La figure 4A montre un exemple d'image fournie par la caméra. Les opérations successives effectuées seront détaillées plus loin.

On décrira les opérations successives effectuées sur une telle image.

La première opération à effectuer est un filtrage et une binarisation permettant de ramener les zones de forte luminance à des lignes ayant une probabilité accrue de représenter des bandes au sol.

Une solution satisfaisante, tenant compte de ce que les éléments recherchés sont des bandes ayant une forte luminance et une orientation proche de la verticale dans l'image consiste à effectuer un filtrage basé uniquement sur les lignes de balayage d'une image, où une bande de marquage se traduit par un pic de luminance.

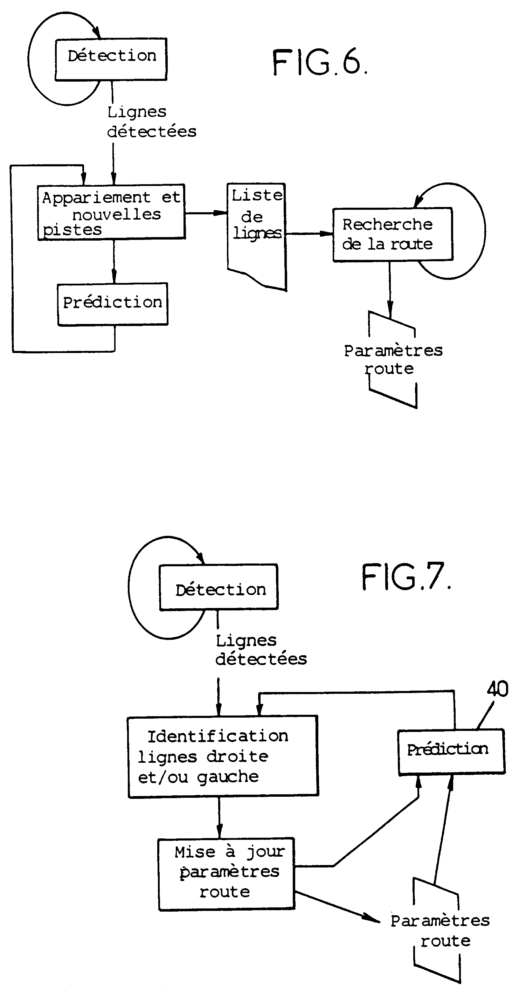

La figure 5A montre un exemple de variation de luminance suivant la direction x transversale à la route (c'est-à-dire une ligne de balayage de télévision). Chacune des bandes apparaît comme un pic 34 (figure 5A). La présence du véhicule peut générer une zone supplémentaire de forte luminance 36.

Chaque ligne d'image correspond à une tranche transversale du sol située à une distance fixe et connue en avant de la caméra, où l'effet de perspective est constant. Pour une ligne de balayage donnée, la largeur des pics de luminance provoqués par une bande de marquage au sol est sensiblement constante et en tout cas inférieure à une largeur maximale, ce qui permet d'éliminer les surintensité sur une largeur trop importante.

Le filtrage peut en conséquence être effectué par une normalisation, consistant à retirer à chaque pixel une valeur égale à la luminance moyenne sur une plage de largeur 2l₂ située de part et d'autre d'une fenêtre de largeur l₁ centrée sur le pixel P considéré (figure 5A). Ce filtrage, qui revient à soustraire la composante continue de la luminance autour de la fenêtre de largeur l₁, laisse passer les pics de largeur inférieure à l₁ et atténue les pics plus larges.

Cela conduit à un signal ayant l'allure montrée en figure 5B. Les pics correspondant aux bandes peuvent alors être identifiés par comparaison à un seuil approprié S. Les centres 38 de bandes peuvent alors être identifiés par recherche de barycentre, par des algorithmes classiques, et/ou par chaînage des points proches les uns des autres le long des colonnes de l'image.

On obtient ainsi les centres des bandes sur chaque ligne d'image, à un pixel près, et les lignes qui les joignent. A l'issue du filtrage et de la binarisation, l'image disponible est réduite aux informations montrées en figure 4B.

On effectue ensuite une opération de reconstruction dans le plan du sol, tenant compte de l'inclinaison α de l'axe optique de la caméra (figure 1).

Les coordonnées x et y de chaque pixel dans le plan z = 0 sont données par des formules mathématiques simples en fonction des coordonnées xᵢ, yᵢ dans le plan de l'image, des fonctions trigonométriques de α et des paramètres optiques de la caméra.

On obtient, à l'issue de cette opération, une présentation du genre montré en figure 4C, où les effets de perspective ont été éliminés et où la position réelle des lignes par rapport à l'emplacement 12a du véhicule est disponible.

L'opération suivante consiste en un chaînage rétablissant la continuité des lignes par une approximation, par exemple en arc de cercle par la méthode des moindres carrés. Les tronçons de ligne sont comparés les uns aux autres par des critères de cohérence afin de fusionner les pointillés, correspondant aux bandes discontinues sur la route, en une seule ligne. Chaque ligne retenue est alors représentée par un modèle (figure 4D) caractérisé par plusieurs paramètres :
- rayon et centre de courbure,
- position et orientation au niveau de la caméra (c'est-à-dire pour y = 0),
- longueur (identifiée par le début et la fin).

Enfin les lignes qui ne répondent pas à des critères de cohérence prédéterminés, par exemple ceux correspondant à une signalisation verticale, sont éliminées (figure 4E).

A l'issue du traitement, les lignes significatives et leur position par rapport au véhicule sont disponibles pour un cycle de balayage de la caméra.

Pour permettre une exploitation plus complète des données, les moyens de traitement comporteront généralement une mémoire d'images capable de mémoriser plusieurs images successives modélisées conformément à la figure 4E.

Toutes les opérations ci-dessus sont effectuées lors d'une phase de recherche, visant à reconnaître les caractéristiques de la route, des lignes représentant une bande de limitation de voie étant recherchée indépendamment. En effet de grandes différences de distance peuvent exiter entre les bandes suivant que l'on se trouve sur une autoroute ou sur une route secondaire.

Il est possible de prévoir dans le dispositif un indicateur à commande manuelle, permettant au conducteur d'indiquer s'il se trouve sur une voie de type autoroute ou de type route de campagne. Cela facilite alors la recherche, car une voie de type autoroute est caractérisée par deux lignes parallèles à droite et à gauche, de courbures similaires, dont l'écartement est compris entre des valeurs normalisées. Sur une voie de type route de campagne, il n'y a marquage que par une ligne centrale.

A défaut d'un indicateur manuel, la recherche de type route de campagne est activée automatiquement si une voie autoroutière n'a pu être détectée pendant un délai déterminé. La largeur de la voie de roulement est alors fixée arbitrairement à partir de la ligne médiane, par exemple à 3,30 mètres, c'est-à-dire à une valeur représentative de la plupart des situations.

La recherche des paramètres de la route peut s'effectuer selon l'organigramme de la figure 6 : l'emplacement de lignes présumées représenter des bandes de marquage au sol et mémoriser. A partir de là un algorithme de prédiction indique l'emplacement attendu et permet, par comparaison, de vérifier la validité de la première identification. La liste des lignes retenues est transmise à une mémoire sur la base de laquelle s'effectue la recherche de la route par scrutation périodique. Une fois la route identifiée, ses paramètres sont mémorisés.

Une fois la route reconnue, les paramètres calculés et mémorisés sont suivis dans leur évolution. La séquence d'opération est alors celle indiquée en figure 7. L'étape de prédiction identifiée en 40 consiste à déterminer des paramètres de position, d'orientation de courbures et d'écartement des lignes définissant la voie de roulement, avec vérification du critère de parallèlisme. L'identification des lignes droite et/ou gauche dans la nouvelle image traitée permet de conserver une représentation du genre montré en figure 4E.

Dans la mesure où le champ de la caméra couvre une voie de roulement située à gauche et/ou à droite de la voie occupée par le véhicule, les bandes de marquage correspondante ne sont recherchées qu'ensuite. En effet il s'agit de lignes plus éloignées de l'axe, donc plus affectées de bruit. Cette acquisition des voies latérales est utile pour la gestion des changements de file par le conducteur.

Une fois ces opérations effectuées, la gestion des alarmes peut s'effectuer par des opérations simples de comparaison, par exemple :
- émission d'une alarme de premier niveau ou d'avertissement en cas d'amorce de croisement d'une bande discontinue vers la gauche, alors qu'il n'y a pas eu préalablement mise en fonctionnement des clignotants gauches ;
- alarme de second niveau en cas de franchissement d'une ligne continue vers la gauche (sur le continent) ou vers la droite (Grande-Bretagne) ;
- alarme de premier niveau en cas de dépassement de la vitesse de 90 km à l'heure sur une voie identifiée comme une route de campagne.

Ces exemples ne sont évidemment donnés qu'à titre non limitatifs.

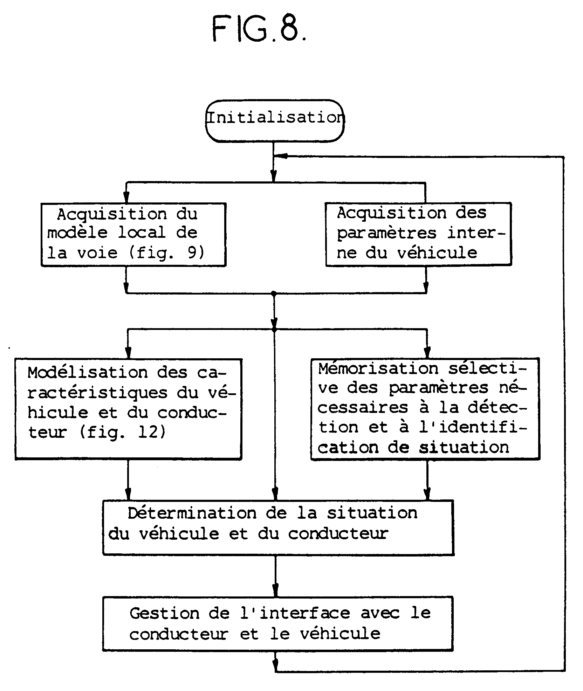

La figure 8 illustre les différentes séquences qui interviennent dans la mise en oeuvre du procédé, dans le cas où ce dernier est prévu pour assurer une aide à la conduite et non pas seulement une visualisation de la position et de l'évolution du véhicule.

A partir de l'initialisation du procédé, il y a d'une part, acquisition du modèle local de la voie, comme indiqué en figure 6, et d'autre part, acquisition des paramètres internes du véhicule.

Au cours de l'acquisition du modèle local de la voie, il y a détermination éventuelle et mémorisation des paramètres qui suffisent à caractériser le modèle, c'est-à-dire :
- l'état opérationnel du système de détection de position du véhicule (recherche de route ou suvi de route) ;
- la position latérale de la caméra par rapport à la voie (c'est-à-dire la distance de la caméra aux bandes droite et gauche) ;
- la largeur de la voie ;
- l'orientation de la caméra par rapport à la voie ;
- le rayon et le sens de courbure de la voie, définis par la bande ou les bandes qui la borne ;
- le type de marquage de la ligne gauche et éventuellement de la ligne droite.

Parallèlement, les paramètres internes du véhicule à acquérir sont constitués par au moins les premiers des paramètres suivants :
- état des indicateurs de direction droit et gauche ;
- angle du braquage du volant ;
- vitesse du véhicule ;
- accélération, définie par la position de la pédale d'accélérateur ou de celle du papillon des gaz ;
- freinage (position de la pédale de frein, pression de freinage ou décélération) ;
- rapport de vitesse engagée.

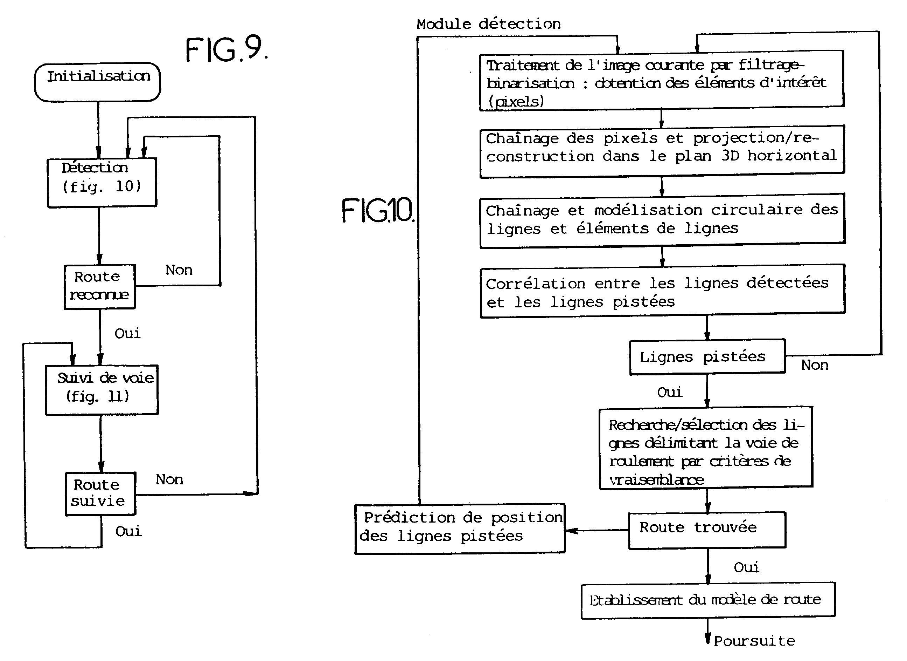

Les opérations d'apprentissage qui interviennent dans l'obtention du modèle local de la voie (alors que certaines des données sont figées, telles que l'orientation de la caméra) peuvent s'effectuer suivant l'organigramme de la figure 9, qu'on pourra comparer à la figure 6. L'orientation de la caméra peut également être déterminée par apprentissage en se basant sur le parallélisme des marquages de voie observés. Ce procédé permet de s'affranchir des différences d'assiette dues à des variations de charge du véhicule.

Le module de détection intervenant dans le logigramme d'acquisition montré en figure 9 peut être celui de la figure 10, où on retrouve les opérations illustrées sur les figures 4B à 4E.

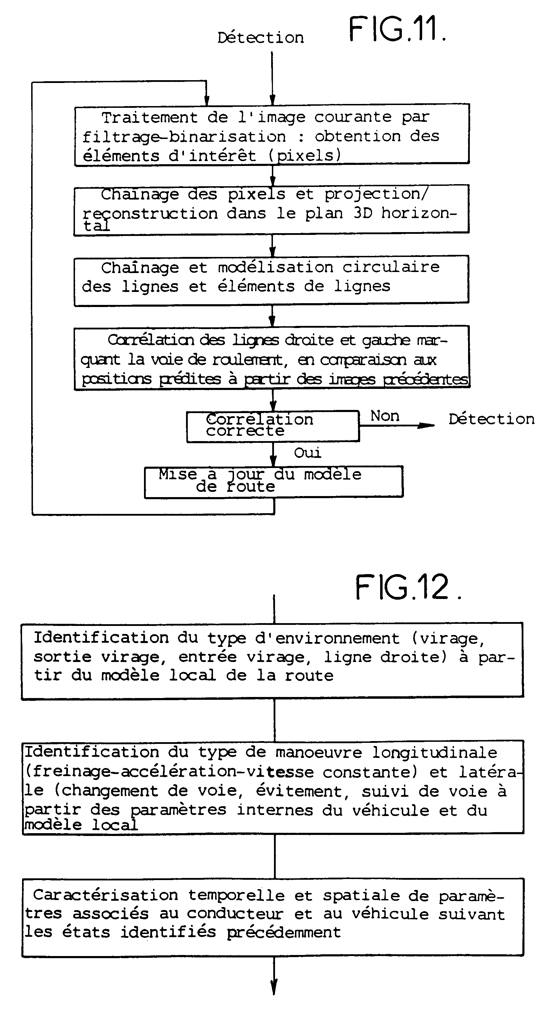

Le module de poursuite ou de pistage de la voie, qui intervient après confirmation de la détection, peut avoir la constitution montrée en figure 11, avec retour à la détection en cas d'absence ou de perte de corrélation.

Quand au module de modélisation des caractéristiques du véhicule et du conducteur, il peut avoir la constitution donnée en figure 12.

L'invention ne se limite pas aux modes particuliers de réalisation qui ont été décrits ci-dessus à titre d'exemples. Elle est susceptible de nombreuses variantes restant dans le cadre des équivalences, offrant une assistance plus ou moins étendue.

## Revendications

1. Dispositif, embarqué sur véhicule routier, de repérage et de suivi de la position du véhicule par rapport à des bandes de marquage au sol, comprenant une caméra (10) fournissant une image de la route en avant du véhicule et des moyens d'affichage ou d'alarme en cas de position anormale du véhicule par rapport aux bandes de marquage, caractérisé en ce qu'il comporte également un calculateur programmé (24-28) ayant des moyens de traitement de l'image permettant effectivement une reconstruction de l'image, à partir de l'image en trois dimensions, tenant compte de la perspective et de l'inclinaison de la camera pour restituer la position réelle des lignes par rapport au véhicule, dans le plan du sol puis, par application de critères de vraisemblance, permettant d'identifier les bandes de marquage (16,18).

2. Dispositif selon la revendication 1, caractérisé en ce que le dispositif comporte également des capteurs (33) de paramètres de conduite, lesdits moyens d'alarme fournissant un signal en cas de discordance entre la situation du véhicule par rapport aux bandes et les signaux fournis par les capteurs indiquant une situation anormale.

3. Dispositif selon la revendication 2, caractérisé en ce que le dispositif est prévu pour provoquer une alarme en cas de croisement d'une bande discontinue sans mise en action préalable de l'indicateur de changement de direction correspondant ou de franchissement de ligne continue.

4. Dispositif selon l'une quelconque des revendications précédentes, caractérisé par des moyens désarmables par le conducteur, commander la direction et maintenir le véhicule au milieu de la voie délimitée par les bandes de marquage au sol.

5. Dispositif selon l'une quelconque des revendications précédentes,dans lequel le calculateur comporte un programme de type système expert à apprentissage déterminant l'évolution des caractéristiques de conduite entre images successives et identifiant une évolution représentative d'un état d'assoupissement ou de fatigue.

6. Dispositif selon l'une quelconque des revendications précédentes, caractérisé en ce que la caméra (10) est unie de moyens d'orientation par apprentissage à partir de l'aspect des marquages parallèles de voies observés.

7. Procédé de repérage et de suivi de la position d'un véhicule en circulation sur une route, suivant lequel :
- on forme, à l'aide d'une caméra, l'image d'une zone de la route en avant du véhicule, comportant les bandes de marquage au sol délimitant une voie de circulation au moins, et on détermine la position du véhicule par rapport aux bandes ou on déclenche une alarme en cas de situation anormale caractérisée en ce que :
- on filtre l'image formée pour ne conserver que les éléments correspondant aux bandes de délimitation des voies,
- on reconstruit l'image filtrée, dans le plan du sol, par compensation des effets de perspective et de l'inclinaison de la caméra et par approximation géométrique, et
- on chaîne les fragments de lignes successives correspondant aux bandes pour générer un modèle de la voie par rapport à la position du véhicule, la situation anormale étant révélée par la modèle.

8. Procédé selon la revendication 6, caractérisé en ce qu'on filtre l'image sur chaque ligne de balayage de type télévision, par soustraction, à la luminance de chaque pixel, de la composante continue de la luminance autour d'une fenêtre entourant le pixel et correspondant à la dimension maximale de l'image de la bande pour la ligne de balayage considérée.

9. Procédé selon la revendication 6 ou 7, caractérisé en ce que le chaînage de rétablissement de la continuité des lignes représentatives des bandes de marquage au sol est effectué par approximation en arc de cercle par la méthode des moindres carrés et vérification d'un critère de cohérence.

## Claims

1. A road vehicle on-board device for identifying and following the position of the vehicle with respect to marking bands on the ground, comprising a camera (10) supplying an image of the road ahead of the vehicle and display or alarm means in case the vehicle is in an abnormal position in relation to the marking bands, characterised in that it also comprises a programmed computer (24-28) having image-processing means enabling the image to be effectively reconstructed from the three dimensional image, taking into account perspective and the inclination of the camera, to restore the actual position of the lines with respect to the vehicle in the plane of the ground, then by the application of probability criteria enabling the marking bands (16, 18) to be identified.

2. A device according to Claim 1, characterised in that the device also comprises driving parameter sensors (33), said alarm means delivering a signal in case of discrepancy between the location of the vehicle with respect to the bands and the signals delivered by the sensors indicating an abnormal location.

3. A device according to Claim 2, characterised in that the device is adapted to trigger an alarm if an interrupted band is crossed without the corresponding direction changing indicator being previously actuated or if a continuous line is crossed.

4. A device according to any of the preceding Claims, characterised by means, which can be disarmed by the driver, for controlling direction and keeping the vehicle in the centre of the lane bounded by the marking bands on the ground.

5. A device according to any of the preceding Claims, wherein the computer comprises an expert/learner type programme determining the development of driving characteristics between successive imagers and identifying a development indicating a state of drowsiness or fatigue.

6. A device according to any of the preceding Claims, characterised in that the camera (10) has means of learner orientation from the appearance of the parallel lane markings observed.

7. A method of identifying and following the position of a vehicle in traffic on a road, comprising:
- forming, with a camera, the image of a zone of the road ahead of the vehicle, comprising the marking bands on the ground bounding at least one traffic lane, and determining the position of the vehicle with respect to said bands or raising an alarm in case of an abnormal location, characterised by:
- filtering the formed image so as to retain only the elements corresponding to the lane-bounding bands,
- reconstructing the filtered image in the plane of the ground by compensating for the effects of perspective and the inclination of the camera and by geometrical approximation, and
- chaining the fragments of successive lines corresponding to the bands to generate a model of the lane with respect to the location of the vehicle, the abnormal situation being revealed by the model.

8. A method according to Claim 6, characterised by filtering the image on each television type sweeping line by subtracting from the luminance of each pixel the continuous component of the luminance around a window enclosing the pixel and corresponding to the maximum dimension of the image of the band for the sweeping line in question.

9. A method according to Claims 6 or 7, characterised in that the chaining for re-establishing the continuity of the lines representing the marking bands on the ground is performed by estimation in the arc of a circle by the method of least squares and the verification of a criterium of coherence.

## Patentansprüche

1. Bordvorrichtung für Straßenfahrzeuge zur Ermittlung und Verfolgung der Position des Fahrzeugs zu Bodenmarkierungsstreifen, bestehend aus einer Kamera (10) zur Herstellung eines Bildes von der Straße vor dem Fahrzeug und aus Anzeige- oder Warnmitteln für den Fall einer unnormalen Position des Fahrzeugs zu den Bodenmarkierungsstreifen,
**dadurch gekennzeichnet**, **daß** sie auch einen programmierten Rechner (24-28) mit Mitteln zur Bearbeitung des Bildes aufweist, der tatsächlich eine Rekonstruktion des Bildes aus dem dreidimensionalen Bild ermöglicht, wobei die Perspektive und die Neigung der Kamera berücksichtigt werden, um die wirkliche Position der Linien in Bezug zum Fahrzeug in der Bodenebene herzustellen, und es dann durch Anwendung von Wahrscheinlichkeitskriterien ermöglicht, die Markierungsstreifen (16, 18) zu identifizieren.

2. Vorrichtung nach Anspruch 1,
**dadurch gekennzeichnet**, **daß** die Vorrichtung auch Sensoren (33) für Fahrparameter aufweist, wobei die genannten Warnmittel bei Nichtübereinstimmung der wirklichen Fahrzeuglage bezogen auf die Streifen mit den von den Sensoren abgegebenen Signalen, die eine unnormale Position anzeigend, ein Warnsignal abgeben.

3. Vorrichtung nach Anspruch 2,
**dadurch gekennzeichnet**, **daß** die Vorrichtung so vorgesehen ist, daß sie bei Überfahren eines unterbrochenen Streifens ohne vorheriges Einschalten des entsprechenden Richtungswechselanzeigers oder bei Überfahren einer durchgehenden Linie ein Warnsignal auslöst.

4. Vorrichtung nach einem der vorherigen Ansprüche,
gekennzeichnet durch Mittel, um die Richtung zu steuern und das Fahrzeug in der Mitte der von den Bodenmarkierungsstreifen eingegrenzten Spur zu halten, die vom Fahrer abgeschaltet werden können.

5. Vorrichtung nach einem der vorherigen Ansprüche, wobei der Rechner ein Programm nach der Art eines Lern-Fachsystems aufweist, das die Fortentwicklung der Fahrcharakteristika zwischen aufeinanderfolgenden Bildern bestimmt und eine Entwicklung, die einen Zustand des Einschlafens oder der Ermüdung darstellt, erkennt.

6. Vorrichtung nach einem der vorherigen Ansprüche,
**dadurch gekennzeichnet, daß** die Kamera (10) mit Mitteln zur Ausrichtung durch einen Lernvorgang ausgehend von der Erscheinung der parallelen Markierungen überwachter Spuren versehen ist.

7. Verfahren zur Ermittelung und Verfolgung der Position eines auf einer Straße fahrenden Fahrzeugs, bei dem
- mit Hilfe einer Kamera das Bild eines vor dem Fahrzeug befindlichen Bereichs der Straße hergestellt wird, der die Bodenmarkierungsstreifen aufweist, die mindestens eine Fahrspur abgrenzen, und die Position des Fahrzeugs zu den Streifen bestimmt wird oder bei unnormaler Position ein Warnsignal ausgelöst wird,
**dadurch gekennzeichnet, daß**
- das hergestellte Bild gefiltert wird, um nur die Elemente zu erhalten, die den Spurbegrenzungsstreifen entsprechen,
- das gefilterte Bild in der Ebene des Bodens durch Kompensation der Perspektivwirkungen und der Neigung der Kamera sowie durch geometrische Näherung rekonstruiert wird, und
- die Fragmente aufeinanderfolgender Linien, die den Streifen entsprechen, aneinandergekettet werden, um ein Modell der Spur im Verhältnis zur Position des Fahrzeugs zu erzeugen, wobei die unnormale Situation durch das Modell angezeigt wird.

8. Verfahren nach Anspruch 6,
**dadurch gekennzeichnet, daß** das Bild in jeder bildschirmartigen Abtastlinie gefiltert wird, indem von der Leuchtdichte jedes Pixels die gleichbleibende Komponente der Leuchtdichte um ein Fenster herum, das das Pixel umgibt und der maximalen Abmessung des Bildes von dem Streifen in der betreffenden Abtastlinie entspricht, abgezogen wird.

9. Verfahren nach Anspruch 6 oder 7,
**dadurch gekennzeichnet, daß** das Verketten zur Wiederherstellung der Kontinuität der Linien, die die Bodenmarkierungsstreifen darstellen, durch Näherung beim Kreisbogen durch die Methode der kleinsten Fehlerquadrate und durch Überprüfung anhand eines Kohärenzkriteriums erfolgt.
